Europäisches Patentamt

(19) European Patent Office

Office européen des brevets

(11) Numéro de publication: **0 017 593**
**B1**

(12) # FASCICULE DE BREVET EUROPEEN

(45) Date de publication du fascicule du brevet:
**01.02.84**

(51) Int. Cl.³: **E 02 F  5/28,** E 02 F  9/06,
E 02 F  3/96, E 02 F  3/32

(21) Numéro de dépôt: **80400462.0**

(22) Date de dépôt: **08.04.80**

(54) **Engin pour le curage des étangs, marais ou canaux.**

(30) Priorité: **10.04.79  FR 7908994**

(43) Date de publication de la demande:
**15.10.80 Bulletin 80/21**

(45) Mention de la délivrance du brevet:
**01.02.84 Bulletin 84/5**

(84) Etats contractants désignés:
**AT BE CH DE GB IT LI LU NL SE**

(56) Documents cités:
**DE - A - 2 133 365**
**FR - A - 1 431 560**
**FR - A - 1 463 335**
**FR - A - 2 139 828**
**FR - A - 2 262 160**
**FR - A - 2 278 859**
**FR - A - 2 285 495**
**US - A - 2 786 284**
**US - A - 3 064 370**
**US - A - 3 989 149**
**US - A - 4 070 978**

(73) Titulaire: **Bibaut, Gilbert, 22, rue de Compiègne,
F-60880 Le Meux (FR)**

(72) Inventeur: **Bibaut, Gilbert, 22, rue de Compiègne,
F-60880 Le Meux (FR)**

(74) Mandataire: **Rodhain, Claude, Cabinet
Rodhain-Genestie 30, rue La Boétie, F-75008 Paris (FR)**

BUNDESDRUCKEREI BERLIN

## Engin pour le curage des étangs, marais ou canaux

L'invention concerne un engin pour le curage et le dragage des étangs, marais on canaux, rus et rivières. Ces engins sont du type constitué d'une structure porteuse, pourvue de patins stabilisateurs, et équipée d'un organe de raclage et de curage mobile, par rapport à la structure, autor des deux axes vertical et horizontal, cet organe étant commandé et manoeuvré depuis un poste de pilotage situé sur la structure porteuse qui est constituée d'un corps étanche, cylindrique ou similaire ayant un faible coefficient de frottement avec le sol, dont au moins l'une des faces frontales comporte une section biseautée à sa base, ce corps servant de bâti porteur aux organes de commande et de pilotage d'une pelle excavatrice comme l'organe de raclage et de curage située à une première des deux extrémités de la structure porteuse, cette pelle étant portée, de façon connue, par deux bras articulés actionnés par des verins.

La demande de brevet francaise publiée N° 2.139.828 a pour objet un engin de ce type dans la forme d'une drague constituée d'une structure porteuse 1, portant à une de ses extrémités une grue 7 articulée à deux bras commandés par des verins 9 et supportant une benne preneuse 8. Cette drague comporte également, du même côté que la grue 7, deux jambes intérieures 11. Cette drague se déplace de la manière décrite à la page 9 ligne 19 à 30 de cette demande de brevet, à savoir que la benne preneuse 8 est enfoncée dans le fond aussi loin que possible en avant de manière à constituer un poids d'ancrage, les jambes antérieures 11 sont légèrement soulevées et le verin 9 commandant le compas de la grue 7 est actionné de manière à fermer ce compas, si bien que l'ensemble de l'engin glisse vers la benne preneuse qui sert de point d'ancrage. Sur un sol marécageux, ce mode de locomotion risque d'être à la fois lent et coûteux en énergie, puisque la majeure partie de la structure porteuse doit glisser sur le sol.

La demande de brevet allemande publiée N° 133 365 décrit également une sorte de drague comportant une structure porteuse 1 qui est munie à une de ses extrémités d'une pelle excavatrice 13, et, à son autre extrémité qui présente un profil biseauté, une sorte de crampon téléscopique 6 disposé à l'extrémité d'une partie coulissante 5. Dans ce cas, la progression de l'engin n'est pas très facile; en effet, le crampon 6 est avancé au maximum, il est fortement ancré dans le sol, puis on rétracte sa tige porteuse 4d, de manière à faire avancer l'engin vers le point d'ancrage constitué par le crampon 6.

La demande de brevet française N° 2 285 495 décrit un véhicule pour l'aménagement de rivages. Ce véhicule est équipé de chenilles qui lui permettent de se déplacer sur des terrains relativement durs, mais il n'est pas du tout adapté à se déplacer sur des terrains mous ou sur l'eau.

On voit qu'il n'existe pas d'engin de travaux publics destiné au draguage et au curage qui puisse se déplacer aisément et rapidement sur des fonds vaseux sans s'enliser.

Selon l'invention ceci est obtenu grâce au fait que la structure porteuse de l'engin est pourvu à sa deuxième extrémité d'une deuxième pelle excavatrice; ces deux pelles excavatrices sont constituées de deux bras articulés sur un axe commun l'un des bras est à monter articulé sur la structure porteuse et l'autre portant la pelle proprement dit, un premier verin commandant l'ouverture et la fermeture de compas constituant les deux bras tandis qu'un second vérin assure le relevage de la pelle; ces deux pelles excavatrices sont utilisées comme organes de curage et comme moyens de locomotion dudit engin par rétraction et déploiement inversés des vérins commandant les deux bras desdites pelles ainsi que les pelles proprement dites.

Grâce à la disposition de ces deux pelles excavatrices, il est possible de soulever l'engin suffisamment haut pour que les forces de frottement soit négligeable et qu'il n'y ait pas de risques d'enlisement.

Les bras reliant les deux pelles excavatrices précitées à la structure portante peuvent pivotés sur un axe vertical suivant un angle d'au moins 180°. Cette disposition permet de réaliser un travail de curage avec les deux pelles excavatrices travaillant en parallèle.

Un engin selon l'invention est représenté à titre d'exemple non limitatif sur les Figures ci-jointes dans lesquelles:

— La Figure 1 est une vue en perspective du véhicule selon l'invention.

— La Figure 2 est une vue de ce même véhicule en position inclinée vers le haut en vue du démontage et du retrait des roues porteuses.

— La Figure 3 est une vue de l'engin en position inclinée vers le haut et reposant sur ses roues.

— La Figure 4 est une vue schématique de l'engin vu de dessus équipé d'un racle.

— La Figure 5 est une vue en plan de l'engin selon une variante de réalisation.

— Les Figures 6A à 6G sont des schémas de principe du mode de locomotion de l'engin selon la Figure 5.

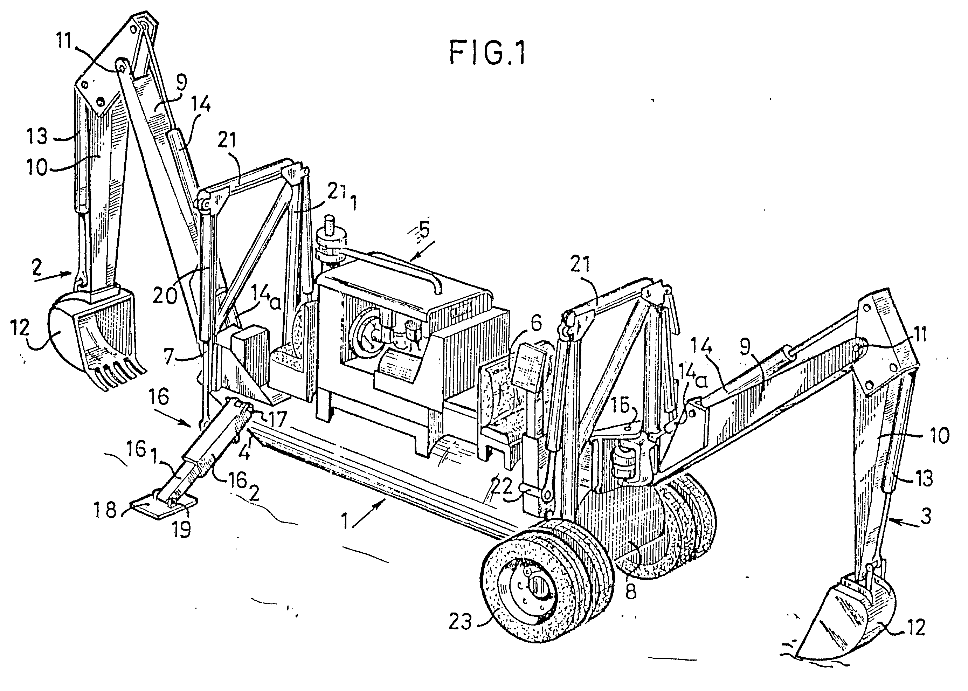

Dans l'exemple de réalisation choisi et tel qu'illustré notamment en Figure 1, l'engin est constitué essentiellement d'un corps principal ou structure porteuse 1 et de deux pelles excavatrices 2 et 3 servant à la fois d'organe de curage ou de dragage et de moyens de locomotion pour le véhicule. La structure porteuse présente la particularité d'être réalisée sous la forme d'un corps cylindrique de longue portée formé d'une sorte de citerne dont les deux extrémités sont obturées de façon étanche, l'une au moins de ces deux extrémités étant biseautée en 4 de façon à faciliter la progression et l'évolution de l'engin sur le sol vaseux ou marécageux. La section biseautée 4 forme un angle rentrant et peut être prévue aux deux extrémités du corps cylindrique de façon à permettre son déplacement dans un sens ou dans l'autre. La forme cylindrique du corps a été utilisée de façon à réduire au minimum le coefficient de frottement de ce corps avec le sol. Cette surface porteuse 1 sert de bâti pour le montage et la fixation des organes de commande et de pilotage constitués essentiellement d'une pompe hydraulique à deux corps alimant les deux pelles excavatrices 2 et 3 et de sièges 6 sur lesquels prend place l'opérateur pour piloter l'une ou l'autre des deux pelles excavatrices.

La structure porteuse présente également la particularité de comporter, à chacune de ses extrémités, en regard de ses faces frontales 7 et 8, une pelle excavatrice constituée, de façon connue, de deux bras 9 et 10 articulés sur un axe commun horizontal 11, le bras 10 étant pourvu, à son extrémité, d'un godet 12 monté articulé par rapport à ce bras 10, l'orientation et le relevage de ce godet 12 étant assurés par un vérin à double effet 13. Les deux bras 9 et 10 travaillent à la façon d'un compas et peuvent être rétractés ou déployés à l'aide d'un vérin de commande 14 mis en oeuvre par la pompe hydraulique 5. Le bras 9 est monté articulé sur la structure porteuse 1 par le jeu d'un axe d'articulation vertical 15, de sorte que les deux bras peuvent se mouvoir dans deux plans orthogonaux passant par la verticale 15 et l'axe horizontal 11. Le bras 9 peut pivoter autour de son axe 15 suivant un angle d'environ 180° afin de pouvoir venir dans un plan perpendiculaire à l'axe longitudinal du corps cylindrique 1. Le bras 10 peut, quant à lui, venir soit dans l'alignement du bras 9 (vérin 14 rétracté), soit former un angle avec ce bras 9 (vérin 14 déployé).

L'ensemble de la pelle 2 ou 3, c'est-à-dire les deux bras 9 et 10 et le godet 12, peut enfin être relevé grâce à un troisième vérin 14a interposé entre la chape d'articulation du bras 9 sur l'axe 15 et un appui médian de ce bras 9, sur lequel s'appuie d'ailleurs également le vérin 14.

La structure peut comporter, par ailleurs, quatre pieds stabilisateurs 16 montés articulés sur des axes sensiblement horizontaux 17. Ces pieds sont formée de deux tubes $16_1$, $16_2$, éventuellement télescopiques, l'extrémité du tube $16_1$ étant pourvue d'un patin ou platine 18 monté oscillant sur un axe 19. Ces pieds stabilisateurs sont reliés à des vérins 20 portés par une potence 21, ces vérins 20 prenant les pieds par en dessous à l'aide de manchons 22, de manière à que les pieds stabilisateurs en position relevée (Fig. 1) se situent dans un plan sensiblement parallèle aux montants verticaux $21_1$ de la potence 21, de manière à ce que ces pieds ne dépassent pas en largeur l'encombrement de ces potences 21. Cette conception a pour effet d'éviter d'accroitre la largeur du véhicule lorsque les pieds stabilisateurs sont relevés, cette disposition étant d'autant plus nécessaire que l'engin a été prévu de faible largeur pour pouvoir évoluer dans des canaux très étroits, voire dans des petits rus de 1,50 m à 2 m de largeur tels que des cressonnières. Il faut noter à ce sujet que la structure cylindrique 1 fait environ 1,20 m de diamètre et que l'engin, lorsque les pieds stabilisateurs sont en position relevée, n'est que de très peu supérieur à cette dimension.

Toujours en se référant à la Figure 1, l'engin de curage est équipé d'un train de roues 23 servant essentiellement au transport du véhicule sur route. Ses roues ne sont prévues qu'à une extrémité de la structure porteuse, l'autre extrémité étant, lors des transports sur route, attelée à un véhicule tracteur et, par conséquent, n'étant plus en contact avec le sol. Ces roues présentent la particularité d'être aisément démontables de manière à ce que l'opérateur puisse procéder à leur retrait lorsqu'il est arrivé sur le lieu de travail.

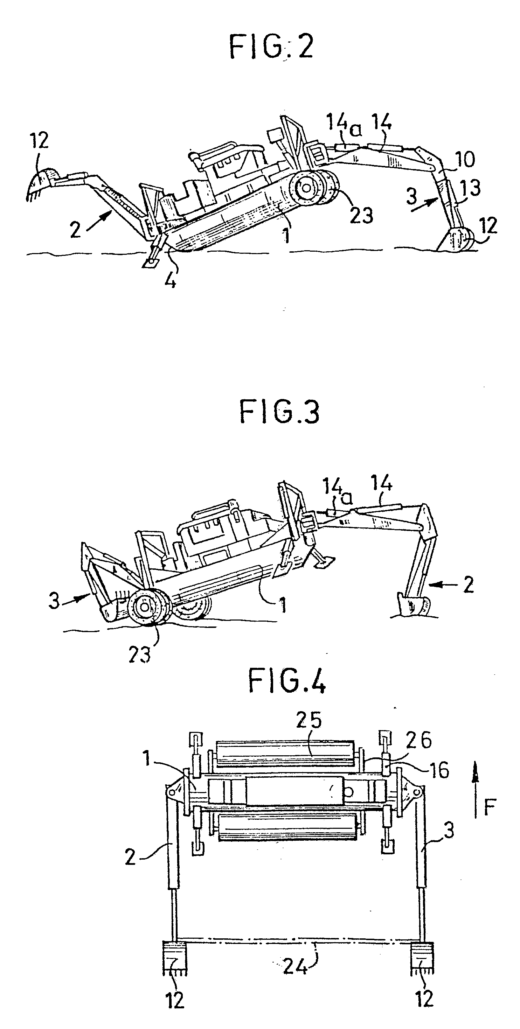

Comme illustré en Figure 2, il suffit, pour procéder à ce retrait des roues, de piquer le godet 12 dans le sol, afin de s'en servir de point d'ancrage, puis de déployer le vérin 14a, ce qui provoque, par réaction, le relevage de la partie avant de l'engin, soit la partie pourvue du train de roues 23. Dans cette position, l'opérateur peut procéder aisément au démontage des boulons ou autres organes de fixation rapide des roues. Après retrait des roues, le véhicule ne repose plus que sur sa surface porteuse cylindrique et sa locomotion est directement assurée par les deux pelles excavatrices 2 et 3. Le déplacement de l'engin est alors assuré par traction sur l'une des pelles et poussée sur l'autre, ce qui provoque le glissement de la structure porteuse sur le sol. Lorsque l'engin est en bonne position on utilise alors les pelles excavatrices 2 et 3 comme pelles de dragage et de curage, l'une des pelles, suivant le sens de déplacement de l'engin, ayant pour effet de tailler la tranchée, l'autre d'assurer l'opération de finition. En fait, le déplacement de l'engin est essentiellement réalisé par les vérins 14 et 14a qui, selon leur rétraction ou leur déploiement, lorsque les godets sont fichés dans le sol, assurent le déplacement de l'engin dans un sens ou dans l'autre.

La Figure 3 montre, à cet égard, qu'il est possible de soulever, c'est-à-dire d'incliner vers le haut l'autre partie de l'engin en fichant la pelle 2 dans le sol et en agissant sur son vérin respectif 14a.

Selon une variante de réalisation, il est possible, afin d'accroîte la capacité de l'engin, de faire pivoter du même côté les deux bras 9 des pelles excavatrices afin de les amener dans des plans parallèles orthogonaux à l'axe longitudinal du corps cylindrique 1. Il est alors possible de réunir les deux pelles excavatrices à l'aide d'un racle 24, de façon à travailler dans le sens de la flèche F si l'on veut curer des surfaces de grande largeur correspondant sensiblement à la longueur de l'engin. Ce racle est démontable et peut être fixé sur les pelles excavatrices par l'intermédiaire de boulons et écrous amovibles.

Enfin, il est possible de prévoir, pour le cas notamment où l'engin devrait évoluer sur des plans d'eau, des flotteurs 25 de fort diamètre, constitués par exemple de containers étanches de forme cylindrique rapportés sur chacun des deux côtés de la structure porteuse 1. La fixation de ces flotteurs peut être effectuée par de simples bras 26 rendus solidaires de la structure porteuse 1, l'engin devenant alors une sorte de ponton flottant à la façon des dragues connues. Il est toutefois évident que l'on pourrait, en donnant des dimensions appropriées au corps principal 1, obtenir la flottaison de l'engin sans avoir recours à des flotteurs auxiliaires.

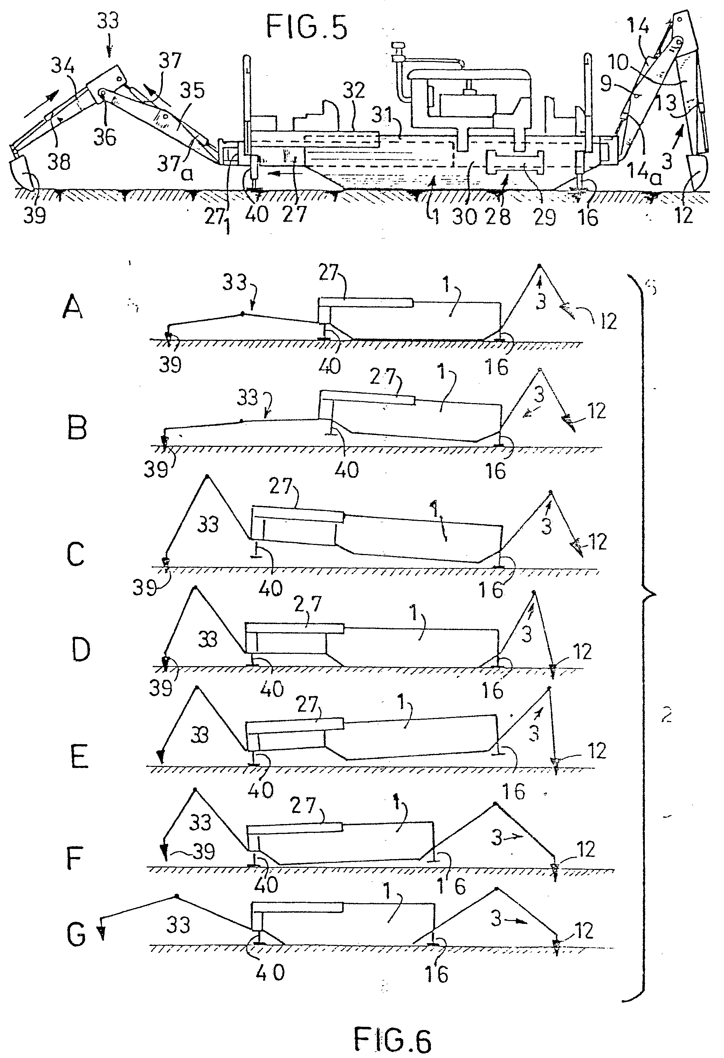

Selon une variante de réalisation telle que représenté sur les Figures 5 et 6, l'engin de curage comporte une structure porteuse 1 constituée d'un corps cylindrique comparable à celui illustré en Figure 1, mais ce corps est prolongé axialement par une poutre ou châssis télescopique 27, susceptible d'accroître la longueur de la structure porteuse pour favoriser son déplacement, c'est-à-dire sa locomotion. Cette poutre est réglable en longueur, à volonté par le jeu d'au moins un vérin 28 dont l'une des parties 29 (par exemple le cylindre) est reliée au corps cylindrique, l'autre partie 30 (le piston) étant solidaire de la poutre 27. Ce vérin est alimenté en fluide à partir d'une pompe à laquelle il est relié. Le glissement de la poutre par rapport au corps peut être favorisé par des glissières 31—32 de forme complémentaire, prévues sur les deux parties à déplacement relatif ou par des galets ou roulements comme cela est usuel en matière de guidage et glissement mécaniques.

L'extrémité libre 27 de la poutre est pourvue d'une pelle excavatrice 33 similaire à la pelle 2 de la Figure 1, cette pelle 33 étant constituée de deux bras 34—35 articulés en 36, d'un premier vérin 37 d'ouverture et de fermeture des bras, d'un second vérin 38 de réglage du godet 39 et d'un troisième vérin 37a de relevage du bras 35, donc de l'ensemble de la pelle. Cette extrémité porte encore des patins stabilisateurs 40 similaires aux patins 16 de l'engin de la Figure 1. La partie frontale arrière du corps cylindrique est biseautée et est pourvue d'une pelle excavatrice 3 conforme à celle de la Figure 1 et portant les mêmes références numériques.

On va maintenant procéder à la description du fonctionnement des deux modes de réalisation qui viennent d'être présentés. Le fonctionnement du premier mode de réalisation peut être décrit en regard de la seule Figure 1, tandis que celui de second mode de réalisation sera décrit en regard des diverses Figures 6A à 6G en raison de la multiplicité des mouvements impliqués.

Le fonctionnement de l'engin de la Figure 1 est le suivant:

Supposons que l'engin se trouve dans une position pour laquelle la pelle 2, que nous appellerons »pelle avant« est déployée, c'est-à-dire avec ses bras pratiquement alignés, tandis que la pelle 3, ou »pelle arrière«, est repliée, de sorte que le corps 1 de l'engin se trouve disposé plus près du godet 12 de cette pelle arrière.

On procède alors à un léger soulèvement de l'ensemble du corps, par exemple de l'ordre de 20 cm au-sessus du sol, en actionnant les deux vérins 14a, de sorte que le corps se trouve pour ainsi dire »suspendu« entre les deux bras 10 des pelles. Il est bien entendu que l'on a au préalable actionné les vérins 13 de manière que les deux godets 12 aient ancré leurs dents dans le sol, étant donné que ce sont ces godets qui servent de points d'appui à l'ensemble de l'engin.

Une fois que ce dernier a été soulevé à l'aide des vérins 14a, on procède alors à une commande synchronisée des deux vérins 14, de manière que le vérin de la pelle avant se déploie alors que celui de la pelle arrière se rétracte, ce qui a pour effet de replier la pelle avant 2 alors que par contre, la pelle arrière 3 se déploie. Au cours de ce mouvement synchronisé des deux pelles, le corps 1 se déplace vers l'avant, adoptant ainsi une nouvelle position a-dessus du sol.

On commande alors en sens inverse les vérins 14a de manière à abaisser le corps 1 jusqu'à ce que ses quatre patins stabilisateurs 16 reviennent au contact du sol (cette commande des vérins 14a correspondant ici à une rétraction, alors que c'est leur déploiement qui a provoqué précédemment le soulèvement du corps). Le corps est ainsi venu dans une position où il se trouve à proximité du godet avant 12.

On actionne alors les vérins 13 des deux godets 12, de manière à dégager ceux-ci de leur ancrage dans le sol, puis on procède à une commande synchronisée des deux vérins 14, en rétractant celui de la pelle avant, tandis qu'on déploie celui de la pelle arrière, ce qui a pour effet de déployer la pelle avant et de replier la pelle arrière.

On actionne alors à nouveau les vérins 13 des godets 12, de manière à ancrer ceux-ci dans le sol, de sorte que l'engin se retrouve exactement dans la même situation qu'au départ, mais dans une position décalée en translation par rapport à la première, sur une distance qui peut, par exemple, être de l'ordre de un ou deux mètres.

Le fonctionnement du second mode de réalisation, représenté à la Figure 5, va maintenant être décrit en regard des Figures 6A à 6G.

Supposons que l'engin se trouve dans la position de la Figure 6A, avec ses patins 16 et 40 reposant sur le sol. On déploie la pelle avant 33, de manière à ancrer le godet 39 dans le sol loin à l'avant de l'engin, tandis que la pelle arrière 3 reste libre de travailler, et ceci pendant les trois premières opérations qui vont être décrites (ce travail pouvant par exemple correspondre à un profilage ou finition du fond de la rivière dans laquelle l'engin se trouve). Dans cette position, la poutre se trouve rentrée dans le corps 1, le vérin 28 étant rétracté.

On actionne alors le vérin 37a dans le sens du déploiement, ce qui a pour effet d'entraîner un léger soulèvement, par exemple de 20 cm, de l'avant de la poutre 27 et de ses patins 40, l'engin se trouve ainsi suspendu entre deux points d'appui articulés, l'un par le godet avant 39, et l'autre par les patins arrières 16.

On commande alors en synchronisation le déploiement du vérin 28 et celui du vérin 37, ce qui a pour effet de faire coulisser la poutre 27 par rapport au corps 1, de manière que cette poutre vienne en porte-à-faux par rapport au corps, alors que la pelle avant 33 se trouve repliée. L'engin se trouve ainsi dans la position de la Figure 6C, toujours suspendu entre le godet 39 et les patins 16, alors que la pelle arrière 3 est en position libre de travail.

On actionne alors le vérin 37a en sens inverse, de manière à rammener les patins 40 au contact du sol et l'ensemble de la poutre du corps en position horizontale. On se trouve alors dans la position de la Figure 6D.

On peut alors dégager le godet avant 39 du sol (à l'aide de son vérin 38), ce qui lui permet de travailler, par exemple à la préparation du sol. On procède par contre à l'ancrage des dents du godet arrière 12 dans le sol, à l'aide du vérin 13 de ce godet. On actionne alors le vérin 14a dans le sens du déploiement ce qui a pour effet de soulever les patins 16 et l'arrière du corps 1, de sorte que l'ensemble de l'engin se trouve suspendu entre, d'une part, les patins avant 40 et, d'autre part, le godet arrière 12, les patins arrière 16 se trouvant à une hauteur de par exemple 20 cm au-dessus du sol. On se trouve alors dans la position de la Figure 6E.

On commande alors en synchronisation la rétraction du vérin 28 et celle du vérin 14, se qui a pour effet de déplacer le corps 1 au-dessous de la poutre 27 avec déploiement simultané de la pelle arrière 3 puisque l'ensemble se trouve en suspension entre les patins 40 et le godet 12. On se trouve alors dans la position de la Figure 6F.

On actionne alors en sens inverse le vérin 14a, ce qui a pour effet de reposer sur le sol les patins arrières 16, de sorte que l'engin se trouve à nouveau disposé en position horizontale entièrement au contact du sol. L'engin se trouve alors dans la position de la Figure 6G.

Il suffit alors de dégager le godet 12 du sol à l'aide de son vérin 13, puis de rétracter le vérin 37 et simultanément déployer le vérin 14 pour amener à nouveau les deux pelles dans la position de la Figure 6A, à savoir la pelle avant déployée et la pelle arrière repliée. L'engin se retrouve exactement dans la même situation qu'au départ, seule sa position a varié et correspond à une translation dont la valeur est celle de la course de la poutre 27 par rapport au corps 1, distance qui peut être par exemple de l'ordre de 2,50 m.

Il est important de noter que les deux modes de réalisation qui ont été décrits sont destinés à des applications relativement différentes. En effet, ce n'est que dans le cas où l'engin doit travailler dans une rivière, ou autre terrain analogue, dont le fond est relativement plat et dont le parcours est relativement rectiligne, qu'il est possible d'utiliser sans difficulté le mode de réalisation de la Figure 1. En effet, si le fond est très irrégulier, et en particulier incliné latéralement, ou encore si la rivière présente des virages prononcés, l'appui en suspension de l'engin entre les deux seuls godets 12 serait pratiquement impossible, le corps ne pouvant pas demeurer exactement en ligne entre ces deux godets, de sorte qu'il en résulterait un déséquilibre et donc un renversement de l'engin. C'est donc essentiellement dans l'un des deux types d'application précités que le mode de réalisation de la Figure 5 trouve son application (il peut bien entendu être utilisé dans d'autres cas par exemple, sur le fond d'une rivière extrêmement caillouteux).

L'engin de curage selon l'invention est appelé à un large développement, étant donné qu'il n'existe pas jusqu'alors de véhicule pouvant évoluer dans des terrains marécageux, et en particulier dans des canaux ou rus de faible largeur dont le fond est particulièrement vaseux et dont l'entretien s'avère particulièrement fréquent tels que les cressonnières ou d'autres canaux, rus, rivières, servant notamment à l'élevage tel que la pisciculture.

## Revendications

1. Engin pour le curage et le dragage des étangs, marais ou canaux rus et rivières, du type constitué d'une structure porteuse (1), pourvue de patins stabilisateurs (16, $16_1$, 18, 19, 40) et équipée d'un organe de raclage et de curage mobile (2), par rapport à la structure, autour des deux vertical (15) et horizontal (11), cet organe (2) étant commandé et manoeuvré depuis un poste de pilotage (6) situé sur la structure porteuse (1) qui est constituée d'un corps (1) étanche cylindrique ou similaire ayant un faible coefficient de frottement avec le sol, dont au moins l'une des faces frontales (7) comporte une section (4) biseautée à sa base, ce corps servant de bâti porteur aux organes de commande (5) et de pilotage (6) d'une pelle excavatrice (2) comme l'organe de ractage et de curage située à une première des deux extrémités de la structure porteuse (1), cette pelle étant portée, de façon connue, par deux bras articulés (9, 10) actionnés par des vérins (13, 14), caractérisé en ce que la structure porteuse (1) en forme de cylindre est pourvue à sa deuxième extrémité d'une deuxième pelle excavatrice (3, 33) similaire à la première (2), les deux pelles excavatrices (2, 3, 33) étant constituées de deux bras articulés (9, 10) sur un axe commun (11), l'un des bras (9) étant monté articulé sur la structure porteuse (1), l'autre (10) portant la pelle proprement dite, un premier vérin (14) commandant l'ouverture et la fermeture du compas constituant les deux bras (9, 10) tandis qu'un second vérin (13) assure le relevage de la pelle (2), et en ce que les pelles excavatrices (2; 3, 33) sont utilisées comme organes de curage et comme moyens de locomotion dudit engin par rétraction et déploiement inversés des vérins (13, 14) commandant les deux bras (9, 10) desdites pelles ainsi que les pelles proprement dites.

2. Engin selon la revendication 1, caractérisé en ce que le bras (9) de chacune des pelles excavatrices (2, 3) peut pivoter sur un axe vertical (15) suivant un angle d'au moins 180°.

3. Engin selon la revendication 1, caractérisé en ce que la structure porteuse (1) est pourvue, à au moins l'une de ses extrémités, d'une paire de roues amovibles (23) utilisée pour le transport sur route, la pelle excavatrice (3) située du côté de ces roues (23) servant de cric pour incliner vers le haut l'engin afin de permettre le démontage et le retrait des roues.

4. Engin selon l'une quelconque des revendications 1 à 3, caractérisé en ce que la structure porteuse est constituées d'un cylindre (1) prolongé axialement par une poutre télescopique réglable (27) en longueur à volonté, cette poutre supportant à son extrémité libre une pelle excavatrice (33) et des patins stabilisateurs (40).

5. Engin selon la revendication 4, caractérisé en ce que la poutre télescopique (27) est reliée à un vérin (28) dont une partie est solidaire du cylindre, le mouvement relatif du cylindre (28) par rapport à la poutre (27) étant utilisé en combinaison avec l'action alternée et inversée des vérins (13, 14) des deux pelles excavatrices (3, 33) comme moyen de locomotion de l'engin.

6. Engin selon la revendication 1, caractérisé en ce que les patins stabilisateurs (16) sont constitués de deux tubes télescopiques (16$_1$, 16$_2$) articulés sur la structure porteuse cylindrique (1), le relevage desdits patins (16) étant assuré par des vérins (20) les prenant par en dessous afin que ces patins en position relevée ne dépassent pas en largeur l'encombrement défini par les potences (21) portant ces vérins (20).

7. Engin selon l'une quelconque des revendications 1 à 7, caractérisé en ce que la structure porteuse cylindrique est équipée d'au moins un flotteur (25) conférant à l'engin un caractère amphibie.

8. Engin selon l'une quelconque des revendications 2 à 7, caractérisé en ce que les pelles excavatrices (2, 3) sont amenées dans un plan parallèle, perpendiculaire à l'axe longitudinal de la structure porteuse (1), les bras d'extrémité (10) de ces pelles étant réunis entre eux par un racle (24) permettant un curage sur une grande largeur.

## Patentansprüche

1. Gerät zum Ausbaggern von Teichen, Morasten oder Gräben, Bächen und kleinen Flüssen, das eine mit Stützfüßen (16, 16$_1$, 18, 19, 40) und einer in Bezug auf sie um die Vertikalachse (15) und die Horizontalachse (11) beweglichen Baggereinrichtung (2) versehene Trägereinheit (1) aufweist, welche Einrichtung (2) von einem auf der Trägereinheit (1) vorgesehenen Lenkerplatz (6) aus gesteuert und betätigt wird, wobei die Trägereinheit (1) aus einem wasserdichten Körper (1) zylindrischer oder ähnlicher Form besteht, der einen geringen Reibungskoeffizienten mit dem Boden besitzt, wobei mindestens eine seiner Stirnflächen (7) einen auf seiner Unterseite abgeschrägten Abschnitt (4) aufweist, welche Körper als Trägergestell für die Steuereinrichtungen (5) und die Lenkeinrichtungen (6) einer die Baggereinrichtung bildenden Aushubschaufel (2) dient, die auf einem ersten der beiden Enden der Trägereinheit (1) angeordnet ist und die in an sich bekannter Weise von zwei angelenkten von Hebeeinrichtungen (13, 14) betätigten Armen (9, 10) getragen wird, dadurch gekennzeichnet, daß die zylinderförmige Trägereinheit (1) an ihrem zweiten Ende mit einer zweiten, der ersten Aushubschaufel (2) ähnlichen Aushubschaufel (3, 33) versehen ist, welche beiden Aushubschaufeln (2; 3, 33) aus zwei auf einer gemeinsamen Achse (11) angelenkten Armen (9, 10) bestehen, wobei einer der Arme (9) gelenkig mit der Trägereinheit (1) verbunden ist und der andere Arm (10) die eigentliche Schaufel trägt, und eine erste Hebeeinrichtung (14) aufweist, die das Öffnen und Schließen des die beiden Arme (9, 10) bildenden Zirkels steuert, während eine zweite Hebeeinrichtung (13) das Anheben der Schaufel (2) gewährleistet, und daß die Aushubschaufeln (2; 3, 33) als Baggereinrichtungen und durch entgegengesetztes Einziehen und Ausfahren der die beiden Arme (9, 10) der genannten Schaufeln steuernden Hebeeinrichtung (13, 14) und damit der Schaufeln selbst als Fortbewegungseinrichtung des genannten Gerätes eingesetzt werden.

2. Gerät nach Anspruch 1, dadurch gekennzeichnet, daß der Arm (9) jeder der Aushubschaufeln (2, 3) um eine vertikale Achse (15) um einen Winkel von mindestens 180° schwenkbar ist.

3. Gerät nach Anspruch 1, dadurch gekennzeichnet, daß die Trägereinheit (1) an mindestens einem ihrer Enden mit einem Paar abnehmbarer Räder (23) zum Transport auf der Straße versehen ist, wobei die auf der Seite dieser Räder (23) gelegene Schaufel als Hebeeinrichtung dient, um das Gerät nach oben neigen und die Räder demontieren und abziehen zu können.

4. Gerät nach einem der Ansprüche 1 bis 3, dadurch gekennzeichnet, daß die Trägereinheit aus einem durch in Achsrichtung beliebig längenverstellbaren Teleskopträger (27) verlängerbaren Zylinder (1) besteht, welcher Träger an seinem freien Ende eine Aushubschaufel (33) und Stützfüße (40) trägt.

5. Gerät nach Anspruch 4, dadurch gekennzeichnet, daß der Teleskopträger (27) mit einem Kraftzylinder (28) verbunden ist, von dem ein Teil kraftschlüssig mit dem Zylinder verbunden ist, wobei die Relativbewegung des Kraftzylinders (28) in Bezug auf den Träger (27) in Kombination mit der alternierenden und entgegengesetzten Aktion der Hebeeinrichtungen (13, 14) der beiden Aushubschaufeln (3, 33) zur Fortbewegung des Gerätes eingesetzt wird.

6. Gerät nach Anspruch 1, dadurch gekennzeichnet, daß die Stützfüße (16) aus zwei an der zylindrischen Trägereinheit (1) angelenkten Teleskoprohren (16₁, 16₂) gebildet sind, wobei das Anheben der genannten Füße (16) durch Hebeeinrichtungen (20) bewirkt wird, die sie so nach oben heben, daß diese Füße in angehobener Stellung in der Breite nicht das von den diese Hebeeinrichtungen (20) tragenden Träger (21) bestimmte Ausmaß überschreiten.

7. Gerät nach einem der Ansprüche 1 bis 6, dadurch gekennzeichnet, daß die zylinderförmige Trägereinheit mit mindestens einem Schwimmkörper (25) versehen ist, der das Gerät mit amphibienfahrzeugähnlichen Eigenschaften ausstattet.

8. Gerät nach einem der Ansprüche 2 bis 7, dadurch gekennzeichnet, daß die Aushubschaufeln (2, 3) in einer zur Längsachse der Trägereinheit (1) parallelen, senkrechten Ebene geführt werden, wobei die äußeren Arme (10) dieser Schaufeln untereinander durch einen Schaber (24) verbunden sind, um ein Baggern über breite Flächen zu ermöglichen.

## Claims

1. Device for clearing and dredging ponds, marshland or canals, watercourse and rivers, of the type consisting of a bearing structure (1), provided with stabilizer feet (16, 16₁, 18, 19, 40) and equipped with a scraping and clearing member (2) which can move with respect to the structure about the vertical and horizontal axes (15) and (11) respectively, this member (2) being controlled and operated from a steering unit (6) situated on the bearing structure (1) which consists of a leak-tight body (1) of a cylindrical or similar shape having a low friction coefficient with the ground, at least one of the front faces (7) of which body comprises a section (4) bevelled at its base, this body serving as a bearing support for the control member (5) and the steering member (6), an excavating scoop (2), like the scraping and clearing member, situated at a first of the two ends of the bearing structure (1), this scoop being supportes in the known manner by two articulated arms (9, 10) operated by jacks (13, 14), characterised in that the bearing structure (1) in the form of a cylinder is provided at its second end with a second excavating scoop (3, 33) similar to the first (2), the two excavating scoops (2; 3, 33) consisting of two arms (9, 10) articulated on a common axis (11), one of the arms (9) being mounted in an articulated manner on the bearing structure (1), the other (10) supporting the scoop itself, a first jack (14) controlling the opening and closing of the compass constituting the two arms (9, 10) whilst a second jack (13) ensures the raising of the scoop (2), and in that the excavating scoops (2; 3, 33) are used as clearing members and means for displacing the said device by reversed retraction and extension of the jacks (13, 14) controlling the two arms (9, 10) of the said scoops and the scoops themselves.

2. Device according to claim 1, characterised in that the arm (9) of each excavating scoop (2, 3) can pivot on a vertical shaft (15) through an angle of at least 180°.

3. Device according to claim 1, characterised in that the bearing structure (1) is provided, at least at one of its ends with a pair of detachable wheels (23) used for transport by road, the excavating scoop (3) situated on the side of these wheels (23) serving a jack for tilting the device upwards in order to be able to dismentle and withdraw the wheels.

4. Device according to any one of claims 1 to 3, characterised in that the bearing structure consists of a cylinder (1) extended axially by a telescopic girder (27), the length of which can be adjusted at will, this girder supporting at its free end an excavating scoop (33) and stabilizer feet (40).

5. Device according to claim 4, characterised in that telescopic girder (27) is connected to a jack (28), a part of which is rigid with the cylinder, the relative movement of the cylinder (28) with respect to the girder (27) being used in combination with the alternate and reversed action of the jacks (13, 14) of the two excavating scoops (3, 33) as a means of displacing the device.

6. Device according to claims 1, characterised in that the stabilizer feet (16) consists of two telescopic tubes (16₁, 16₂) articulates on the cylindrical bearing structure (1), the raising of the said feet (16) being ensured by jacks (20) holding them from below so that the width of these feet in a raised position does not exceed the clearance defined by the cross-pieces (21) supporting the jacks (20).

7. Device according to any one of claims 1 to 6, characterised in that the cylindrical bearing structure is equipped with at least one float (25) giving the device an amphibious nature.

8. Device according to any one of claims 2 to 7, characterised in that the excavating scoops (2, 3) are guided in a parallel plane, perpendicular to the longitudinal axis of the bearing structure (1), the end arms (1) of these scoops being connected to one another by a scraper (24) enabling clearing over a large area.

FIG.1

## FIG. 2

## FIG.3

## FIG.4

FIG.5

FIG.6